# EUROPÄISCHE PATENTANMELDUNG

(11) **EP 0 990 840 A1**
(43) Veröffentlichungstag der Anmeldung: **05.04.2000**
(21) Anmeldenummer: 99112644.2
(22) Anmeldetag: 02.07.1999
(51) Int. Cl.: F21V 8/00

(54) **Dimmbare Beleuchtungsvorrichtung**

(30) Priorität: 30.09.1998 DE 19844889
(71) Anmelder: Patent-Treuhand-Gesellschaft für elektrische Glühlampen mbH, 81543 München (DE)
(72) Erfinder: Döll, Gerhard, Dr., 89075 Ulm (DE)

(57) **Zusammenfassung**

Die Erfindung betrifft eine Beleuchtungsvorrichtung mit einer lichtdurchlässigen, lichtstreuenden Scheibe (1), mit mindestens einer, entlang einer geradlinig verlaufenden Kante der lichtstreuenden Scheibe (1) angeordneten Aperturlampe (2, 3), die drehbar um ihre Zylinderachse in einer Halterung (6, 7) gelagert ist, und mit einer Abdeckung (4, 5) für die mindestens eine Aperturlampe (2, 3). Durch Drehen der mindestens einen Aperturlampe (2, 3) um ihre Achse wird die Lichteinkopplung in die lichtdurchlässigen, lichtstreuenden Scheibe (1) beeinflußt.

## Beschreibung

Die Erfindung betrifft eine Beleuchtungsvorrichtung gemäß dem Oberbegriff des Patentanspruchs 1.

### I. Stand der Technik

Eine derartige Beleuchtungsvorrichtung ist beispielsweise in der europäischen Offenlegungsschrift EP 0 607 453 A1 offenbart. Diese Schrift beschreibt eine Displayhinterleuchtung, die eine im wesentlichen rechteckige, lichtdurchlässige Scheibe und eine L-förmige Leuchtstofflampe aufweist. Die Leuchtstofflampe liegt an zwei Kanten der lichtdurchlässigen Scheibe an. Beide L-Schenkel der Lampe sind mit einer als Reflektor ausgebildeten Abdeckung versehen.

### II. Darstellung der Erfindung

Es ist die Aufgabe der Erfindung, eine Beleuchtungsvorrichtung, insbesondere eine Displayhinterleuchtung, mit einer kontinuierlich veränderbaren Helligkeit bereitzustellen.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Die erfindungsgemäße Beleuchtungsvorrichtung besitzt mindestens eine elektrische Lampe und eine lichtdurchlässige, lichtstreuende Scheibe mit mindestens einer geradlinig verlaufenden Kante, entlang der die mindestens eine elektrische Lampe angeordnet und mittels einer Halterung fixiert ist.

Die mindestens eine elektrische Lampe ist erfindungsgemäß als Aperturlampe mit einem zylindrischen Lampengefäß ausgebildet, die in der Halterung um ihre Zylinderachse drehbar gelagert ist. Außerdem weist die Beleuchtungsvorrichtung vorteilhafterweise einen Lichtabsorber auf, der das von der mindestens einen Aperturlampe emittierte, nicht in die lichtstreuende Scheibe eingekoppelte Licht absorbiert. Durch Drehen der mindestens einen Aperturlampe um ihre Achse wird die Menge des in die lichtstreuenden Scheibe eingekoppelten Lichtes kontinuierlich variiert und entsprechend die Helligkeit der Beleuchtungsvorrichtung eingestellt. Maximale Helligkeit wird erzielt, wenn die Apertur der Aperturlampe in ihrer gesamten Breite der Kante der lichtstreuenden Scheibe zugewandt ist. Durch Drehen der mindestens einen Aperturlampe wird die wirksame Breite der Apertur verringert und das in die lichtstreuende Scheibe eingekoppelte Licht entsprechend des Drehwinkels reduziert. Der Lichtabsorber absorbiert den nicht in die lichtstreuende Scheibe eingekoppelten Anteil des von der mindestens einen Aperturlampe emittierten Lichts.

Vorteilhafterweise besitzt die erfindungsgemäße Beleuchtungsvorrichtung ein mit einer Dimmerschaltung versehenes Betriebsgerät für die mindestens eine elektrische Lampe. Dadurch kann die erfindungsgemäße Beleuchtungsvorrichtung nicht nur mechanisch sondern auch elektrisch gedimmt werden und eine noch feinere Helligkeitsabstufung erzielt werden. Die Halterung für die mindestens eine elektrische Lampe ist vorteilhafterweise als eine die Lampe umschließende und an die mindestens eine geradlinig verlaufende Kante angeformte Röhre ausgebildet. In diesem Fall besteht der Lichtabsorber vorteilhafterweise aus einer lichtundurchlässigen Beschichtung der röhrenförmigen Halterung. Der Lichtabsorber kann aber vorteilhafterweise auch als eine lichtundurchlässige Abdeckung der mindestens einen elektrischen Lampe ausgebildet sein, die beispielsweise auf das Lampengefäß aufgeschnappt oder auf andere Weise an der Lampe oder an der Streuscheibe befestigt ist. Die Breite der Apertur der mindestens einen Aperturlampe ist vorteilhafterweise auf die Dicke der lichtstreuenden Scheibe abgestimmt, um eine möglichst geringe Lichtabstrahlung in andere Richtungen als auf die Scheibenkante zu gewährleisten. Vorteilhafterweise ist die erfindungsgemäße Beleuchtungsvorrichtung mit einer Drehvorrichtung zur Drehung der mindestens einen Lampe um deren Achse und mit einem Einstellrad zur Betätigung der Drehvorrichtung ausgestattet. Das Einstellrad ist vorteilhafterweise zusätzlich an die Dimmerschaltung gekoppelt. Dadurch wird die Beleuchtungsvorrichtung gleichzeitig auf mechanische und elektrische Weise gedimmt.

Gemäß des besonders bevorzugten Ausführungsbeispiels der Erfindung besitzt die Beleuchtungsvorrichtung eine lichtstreuende Scheibe mit zwei einander gegenüberliegenden geradlinig verlaufenden Kanten, entlang derer jeweils eine Aperturlampe angeordnet ist. Dadurch wird eine gleichmäßige Helligkeitsverteilung über die lichtstreuende Scheibe erreicht. Die Drehvorrichtung ist vorzugsweise derart mit den beiden Aperturlampen verbunden, daß die Betätigung des Einstellrades eine simultane, gegensinnige Drehbewegung der beiden Lampen um ihre jeweilige Achse auslöst.

### III. Beschreibung des bevorzugten Ausführungsbeispiels

Nachstehend wird die Erfindung anhand eines bevorzugten Ausführungsbeispiels näher erläutert. Es zeigen:
- Figur 1: einen Querschnitt durch eine Beleuchtungsvorrichtung gemäß des bevorzugten Ausführungsbeispiels der Erfindung in schematischer Darstellung, gedimmter Betriebszustand
- Figur 2: einen Querschnitt durch eine Beleuchtungsvorrichtung gemäß des bevorzugten Ausführungsbeispiels der Erfindung in schematischer Darstellung, ungedimmter Betriebszustand

Bei der Beleuchtungsvorrichtung gemäß des bevorzugten Ausführungsbeispiels der Erfindung handelt es sich um eine Displayhinterleuchtung. Sie besteht aus einer rechteckigen transparenten, lichtstreuenden Scheibe 1, zwei Aperturlampen 2, 3 mit jeweils einem langgestreckten, zylindrischen Lampengefäß, jeweils einem Lichtabsorber 4, 5 für die beiden Lampen 2, 3, einem mit einer Dimmerschaltung ausgerüsteten Betriebsgerät (nicht abgebildet) für die Lampen 2, 3 und einer mit einem Einstellrad (nicht abgebildet) versehenen Drehvorrichtung (nicht abgebildet) zum Drehen der Lampen um ihre jeweilige Achse. An ihren Längsseiten ist die lichtstreuende Scheibe 1 jeweils mit einer angeformten, röhrenförmigen Halterung 6, 7 für jeweils eine der beiden Aperturlampen 2, 3 ausgestattet. Die röhrenförmigen Halterungen 6, 7 umschließen die Lampen 2, 3 über die gesamte Länge ihres Lampenengefäßes. Die röhrenförmigen Halterungen 6, 7 sind jeweils über ihre gesamte Länge mit einer lichtundurchlässigen Beschichtung 4, 5 versehen, so daß das von den Lampen 2, 3 emittierte Licht nur zu den Längskanten der lichtstreuende Scheibe 1 gelangen kann. Licht, das von den Lampen 2, 3 in andere Richtungen als zu der Längskante der lichtstreuende Scheibe 1 emittiert wird, wird von einer der lichtundurchlässigen Beschichtungen 4, 5 absorbiert. Beide Lampen 2, 3 sind in den röhrenförmigen Halterungen 6, 7 um ihre Zylinderachse drehbar gelagert. Durch Betätigung der mit den beiden Lampen 2, 3 verbundenen Drehvorrichtung mittels des Einstellrades werden die Lampen 2, 3 simultan um den gleichen Winkel, allerdings in entgegengesetzte Richtung, um ihre Zylinderachse gedreht. Bei den Aperturlampen 2, 3 handelt es sich vorzugsweise um Niederdruckentladungslampen, beipielsweise Leuchtstofflampen, oder um Xenon-Excimer-Lampen, die an einem gemeinsamen Betriebsgerät, das mit einer Dimmerschaltung ausgestattet ist, betrieben werden. Diese Aperturlampen 2, 3 besitzen jeweils ein rohrförmiges, zylindrisches Lampengefäß. Die Lampengefäße der beiden Aperturlampen 2, 3 sind auf der Außenseite über ihre gesamte Länge und über den größten Teil ihres Umfanges mit einer lichtundurchlässigen Schicht 10, 11 versehen. Der lichtdurchlässige, unbeschichtete Teil des Lampengefäßes, der als Apertur 12, 13 bezeichnet wird, erstreckt sich über einen schmalen Streifen in Längsrichtung der jeweiligen Aperturlampe 2, 3. Die Breite der Apertur 12, 13 ist bei beiden Lampen 2, 3 auf die Dicke der lichtstreuenden Scheibe 1 abgestimmt. Sie erstreckt sich über einen Umfangswinkel von ca. 60 Grad und ist an die Dicke der lichtstreuenden Scheibe 1 angepaßt. Die Länge der Apertur 12, 13 ist auf die Länge der Längskanten der lichtstreuenden Scheibe 1 abgestimmt. Die Lampengefäße der Aperturlampen 2, 3 liegen an den Längskanten der lichtstreuenden Scheibe 1 an.

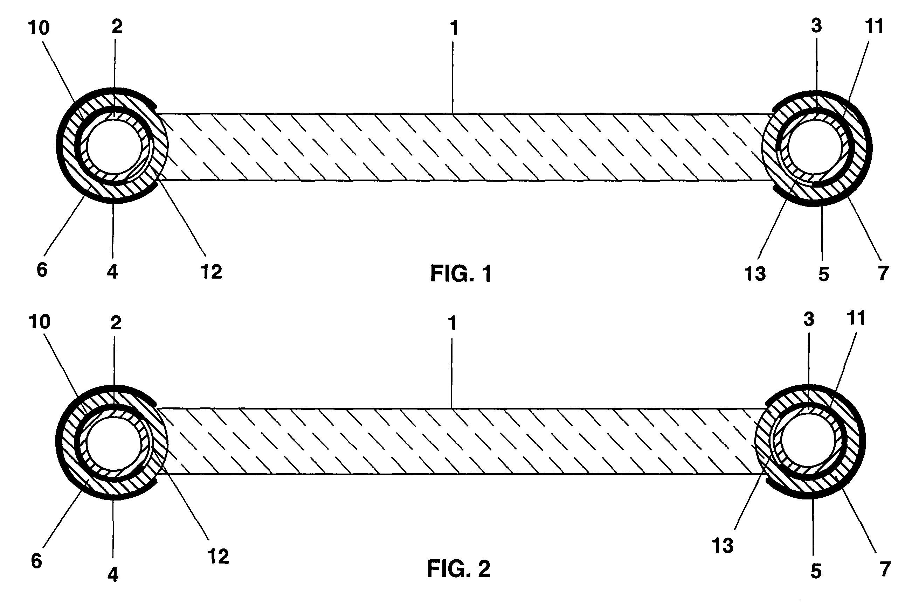

Die lichtdurchlässige, lichtstreuende Scheibe 1 erscheint in maximaler Helligkeit wenn die Apertur 12, 13 beider Lampen 2, 3 an der jeweiligen Längskante der lichtstreuende Scheibe 1 anliegt. In diesem Fall wird der größte Teil des von den beiden Lampen 2, 3 erzeugten Lichts über die Längskanten in die lichtstreuende Scheibe 1 eingekoppelt. In Figur 2 ist dieser Fall abgebildet. In Figur 1 sind die Lampen 2, 3 gegensinnig um einen Winkel von ungefähr 30 Grad gegenüber der Stellung in Figur 2 gedreht. Die wirksame Apertur 12, 13 beträgt hier bei beiden Lampen 2, 3 nur noch etwa 50 Prozent ihres maximalen Wertes. Entsprechend reduziert sich daher auch die Lichteinkopplung in die lichtstreuende Scheibe 1. Zusätzlich wird über das Einstellrad, das beispielsweise über ein Potentiometer an die Dimmerschaltung gekoppelt ist, auch die elektrische Leistungsaufnahme beider Lampen 2, 3 reduziert. Die Drehvorrichtung zum gegensinnigen Drehen der Lampen 2, 3 um ihre Achse ist in bekannter Weise, beispielsweise mittels eines Zahnriemens oder mittels einer Welle realisiert. Zum Betrieb der beiden Lampen 2, 3 können handelsübliche Betriebsgeräte mit Dimmvorrichtung verwendet werden.

## Patentansprüche

1. Beleuchtungsvorrichtung mit
- einer lichtdurchlässigen, lichtstreuenden Scheibe (1), die mindestens eine geradlinig verlaufende Kante besitzt,
- mindestens eine Lampe (2, 3), die entlang der mindestens einen geradlinig verlaufenden Kante angeordnet und mittels einer Halterung (6, 7) an der lichtdurchlässigen, lichtstreuenden Scheibe (1) befestigt ist,
dadurch gekennzeichnet, daß
- die mindestens eine Lampe (2, 3) eine Aperturlampe mit einem zylindrischen Lampengefäß ist,
- die mindestens eine Lampe (2, 3) in der Halterung (6, 7) um ihre Zylinderachse drehbar gelagert ist.

2. Beleuchtungsvorrichtung nach Anspruch 1, dadurch gekennzeichnet, daß die Beleuchtungsvorrichtung ein Betriebsgerät für die mindestens eine elektrische Lampe aufweist, wobei das Betriebsgerät eine Dimmerschaltung enthält.

3. Beleuchtungsvorrichtung nach Anspruch 1, dadurch gekennzeichnet, daß die Beleuchtungsvorrichtung eine Drehvorrichtung besitzt, mittels der die mindestens eine elektrische Lampe (2, 3) um ihre Achse drehbar ist.

4. Beleuchtungsvorrichtung nach Anspruch 3, dadurch gekennzeichnet, daß die Beleuchtungsvorrichtung ein Einstellrad besitzt, das an die Drehvorrichtung gekoppelt ist und mittels der die Drehvorrichtung betätigt wird.

5. Beleuchtungsvorrichtung nach den Ansprüchen 2 und 4, dadurch gekennzeichnet, daß das Einstellrad an die Dimmerschaltung gekoppelt ist.

6. Beleuchtungsvorrichtung nach Anspruch 1, dadurch gekennzeichnet, daß die Beleuchtungsvorrichtung einen Lichtabsorber (4, 5) aufweist, der das von der mindestens einen Lampe (2, 3) emittierte, nicht in die lichtdurchlässige, lichtstreuende Scheibe (1) eingekoppelte Licht absorbiert.

7. Beleuchtungsvorrichtung nach Anspruch 1, dadurch gekennzeichnet, daß die Halterung (6, 7) als eine die mindestens eine elektrische Lampe (2, 3) umschließende Röhre ausgebildet ist, die an die mindestens eine geradlinig verlaufende Kante angeformt ist.

8. Beleuchtungsvorrichtung nach Anspruch 1, dadurch gekennzeichnet, daß der Lichtabsorber (4, 5) eine lichtundurchlässige Abdeckung der mindestens eine elektrischen Lampe (2, 3) ist.

9. Beleuchtungsvorrichtung nach Anspruch 7, dadurch gekennzeichnet, daß der Lichtabsorber (4, 5) als eine lichtundurchlässige Beschichtung der Halterung (6, 7) ausgebildet ist.

10. Beleuchtungsvorrichtung nach Anspruch 1, dadurch gekennzeichnet, daß die Breite der Apertur (12, 13) der mindestens einen Aperturlampe (2, 3) auf die Dicke der lichtdurchlässigen, lichtstreuenden Scheibe (1) abgestimmt ist.

11. Beleuchtungsvorrichtung nach Anspruch 1, dadurch gekennzeichnet, daß die lichtdurchlässige, lichtstreuende Scheibe (1) zwei einander gegenüberliegende, geradlinig verlaufende Kanten besitzt und die Beleuchtungsvorrichtung zwei elektrische Lampen (2, 3) besitzt, die jeweils entlang einer der geradlinig verlaufenden Kanten angeordnet sind.

12. Beleuchtungsvorrichtung nach den Ansprüchen 3, 4 und 11, dadurch gekennzeichnet, daß die Drehvorrichtung derart mit beiden elektrischen Lampen (2, 3) verbunden ist, daß die Betätigung des Einstellrades eine simultane, gegensinnige Drehbewegung der beiden Lampen (2, 3) um ihre jeweilige Achse auslöst.
